# EUROPÄISCHE PATENTSCHRIFT

(11) **EP 1 166 067 B1**
(45) Veröffentlichungstag und Bekanntmachung des Hinweises auf die Patenterteilung: **16.09.2009**
(21) Anmeldenummer: 00912584.0
(22) Anmeldetag: 10.03.2000
(51) Int. Cl.: G01K 13/00, G01K 1/08

(54) **INFRAROT-THERMOMETER MIT EINER BEHEIZBAREN MESSSPITZE UND SCHUTZKAPPE**
INFRARED THERMOMETER WITH A HEATABLE MEASURING TIP AND PROTECTIVE CAP
THERMOMETRE A INFRAROUGES COMPORTANT UNE POINTE DE MESURE ET UN CAPUCHON DE PROTECTION POUVANT CHAUFFER

(30) Priorität: 25.03.1999 DE 19913672
(43) Veröffentlichungstag der Anmeldung: 02.01.2002
(73) Patentinhaber: KAZ Europe SA, 1003 Lausanne (CH)
(72) Erfinder: KRAUS, Bernhard, D-35619 Braunfels (DE); KLÖS, Alexander, D-65719 Hofheim (DE); KAHLER, Elke, D-64347 Griesheim (DE); BEERWERTH, Frank, D-65594 Runkel-Ennerich (DE); MANNEBACH, Horst, D-56294 Münstermaifeld (DE)
(74) Vertreter: Grünecker, Kinkeldey, Stockmair & Schwanhäusser Anwaltssozietät
(86) Internationale Anmeldenummer: PCT/EP2000/002090
(87) Internationale Veröffentlichungsnummer: WO 2000/058703

(56) Entgegenhaltungen:
- EP-A- 0 411 121
- US-A- 4 602 642

## Beschreibung

Die Erfindung betrifft ein Infrarot-Thermometer nach dem Oberbegriff des Anspruchs 1 mit einer beheizbaren Meßspitze, insbesondere ein Fieberthermometer zur Temperaturmessung im Ohr, sowie eine beheizbare Schutzkappe nach dem Oberbegriff des Anspruchs 13.

Aus der US-A-3,491,596 ist ein Ohrthermometer mit einer beheizbaren Meßspitze bekannt. Die Meßspitze weist an ihrem vorderen Ende einen Hohlraum auf, in dem sich ein Heizelement und ein als Wärmesensor dienender Feldeffekttransistor befindet. Die Wände des Hohlraums bestehen aus einem gut wärmeleitenden Material, beispielsweise Kupfer. Der Feldeffekttransistor ist mit den Hohlraumwänden thermisch gekoppelt. Auf die Meßspitze außen auftreffende Wärmestrahlung wird an den Feldeffekttransistor weitergeleitet, der daraufhin ein entsprechendes Temperaturmeßsignal abgibt. Der Feldeffekttransistor wird durch das Heizelement auf eine Temperatur vorgeheizt, die ungefähr der Körpertemperatur entspricht. Dadurch soll sich die Meßzeit im Vergleich zu einem ungeheizten Wärmesensor verkürzen.

Aus der US-A-4,602,642 ist ein Ohrthermometer bekannt, dessen Meßspitze einen Wellenleiter aufweist, der sich von einem vorderen Ende der Meßspitze ins Innere der Meßspitze erstreckt. An seinem hinteren Ende ist der Wellenleiter an einem Metallgehäuse befestigt, in dem ein Thermopile-Infrarotsensor angeordnet ist. Das Metallgehäuse und der mit diesem gut wärmeleitend verbundene Infrarotsensor kann durch Heizwiderstände und eine Regelanordnung auf eine Temperatur gebracht werden, die ungefähr der Körpertemperatur entspricht. Für die Aufheizung eines derart großen Teils des Thermometers sind jedoch relativ lange Aufheizzeiten und entsprechend große Energiemengen erforderlich. Der Wellenleiter und das vordere Ende der Meßspitze werden unmittelbar vor der Messung in einem beheizten Referenzmessobjekt ("target") auf eine bestimmte Temperatur aufgeheizt und zur Messung daraus entnommen.

Durch Beheizung der in einen Gehörgang einführbaren Meßspitze wird ein Wärmefluß zwischen der Meßspitze und dem Gehörgang weitgehend verhindert, d.h. Meßspitze und Gehörgang befinden sich während der Temperaturmessung im thermischen Gleichgewicht. Daher können auf diese Weise Meßfehler vermieden werden, die dadurch entstehen, daß sich der Ohrkanal abkühlt, weil die in den Ohrkanal eingeführte Meßspitze kälter ist als dieser, und deshalb eine zu kleine Temperatur gemessen wird. Derartige Meßfehler sind nicht nur von der anfänglichen Temperaturdifferenz zwischen Meßspitze und Ohrkanal und der Dauer der Abkühlung bzw. der Dauer des Meßvorgangs abhängig sondern werden auch durch die jeweilige Positionierung oder Ausrichtung der Meßspitze im Ohrkanal beeinflußt.

Wird nämlich die Meßspitze direkt gegen die Wand des Gehörgangs gerichtet, so wird die von der kalten Meßspitze emittierte Infrarotstrahlung teilweise von der Wand reflektiert (Reflexionsfaktor etwa 3 - 5 %) und von der Meßspitze erfaßt, so daß nicht nur die von der abgekühlten Gehörgangwand emittierte Infrarotstrahlung sondern auch die von der Meßspitze selbst stammende reflektierte Infrarotstrahlung gemessen und eine entsprechend zu niedrige Temperatur angezeigt wird. Ist die Meßspitze hingegen ordnungsgemäß in Richtung auf das Trommelfell ausgerichtet, wird die von der kalten Meßspitze emittierte Strahlung erst mehrfach mit entsprechenden Verlusten im Gehörgang reflektiert, bevor sie wieder in die Meßspitze eingekoppelt wird, so daß es nur zu einer entsprechend geringeren Verfälschung der Meßergebnisse kommt.

Ein weiterer Nachteil eines Infrarot-Thermometers mit einer unbeheizten Meßspitze besteht darin, daß sich die Temperatur einer aufgesetzten Schutzkappe je nach Größe der Differenz zwischen Umgebungstemperatur und Ohrkanaltemperatur beim Einführen der Meßspitze in den Ohrkanal relativ stark ändert. Dadurch ändert sich auch die Strahlungsemission der Schutzkappe, was einen entsprechenden Meßfehler verursacht. Bei einer geheizten Meßspitze ändert sich dagegen die Temperatur der Schutzkappe während eines Meßvorgangs kaum, da sie durch die Temperatur der Meßspitze bestimmt ist.

Es ist Aufgabe der vorliegenden Erfindung ein Infrarot-Thermometer mit einer beheizbaren Meßspitze anzugeben oder eine verbesserte Schutzkappe für ein Infrarothermometer, bei dem die erforderliche Heizenergie so gering ist, daß sie beispielsweise einer im Thermometer vorhandenen Batterie entnommen werden kann.

Diese Aufgabe wird erfindungsgemäß gelöst durch ein Infrarothermometer nach Anspruch 1 und eine Schutzkappe nach Anspruch 13, wobei die Meßspitze und/oder eine in an sich bekannter Weise auf die Meßspitze aufsetzbare Schutzkappe so ausgestaltet sind/ist, daß nur der vordere Bereich der Meßspitze bzw. der Schutzkappe auf eine Temperatur aufheizbar ist, die in etwa der normalen Ohrkanaltemperatur entspricht.

Die erfindungsgemäße Ausgestaltung der Meßspitze eines Infrarot-Thermometers macht sich den Umstand zunutze, daß der in der Meßspitze befindliche Infrarotsensor nur ein begrenztes Gesichtsfeld hat. Es ist daher ausreichend, wenn nur der Teil der Meßspitze dieselbe Temperatur wie der Ohrkanal hat, der mit dem im Gesichtsfeld des Infrarotsensors liegenden Teil des Ohrkanals in thermische Wechselwirkung tritt. Daher ist bei einer erfindungsgemäßen Meßspitze praktisch nur das vordere Ende der Meßspitze, d.h. insbesondere deren Stirnfläche, beheizbar ausgebildet. Dieser relativ kleine Bereich kann sehr energiesparend beheizt werden, und ist vorzugsweise gegenüber dem nicht beheizbaren Teil der Meßspitze thermisch isoliert.

Ein erfindungsgemäßes Infrarot-Thermometer weist am vorderen Ende seiner Meßspitze einen Strahlungseintrittsbereich und ein Heizelement auf, das vorzugsweise elektrisch beheizbar ist. Das Heizelement ist entweder in die Meßspitze eingebaut oder eine auf die Meßspitze aufsteckbare Schutzkappe ist mit einem Heizelement versehen. Es können auch zwei Heizelemente vorgesehen sein, von denen das eine in die Meßspitze eingebaut ist, und das andere mit einer auf die Meßspitze aufsteckbaren Schutzkappe verbunden ist.

Das Heizelement besteht beispielsweise aus mindestens einem NTC- oder PTC- Widerstand oder Transistor, der/die am vorderen Ende der Meßspitze angebracht ist/sind. Es kann aber auch beispielsweise aus einer leiterbahnförmigen Metallschicht oder einer Schicht aus einem elektrisch leitfähigen Kunststoff bestehen, die auf ein am vorderen Ende der Meßspitze angeordnetes Strahlungseintrittsfenster, die Schutzkappe oder die Meßspitze selbst aufgebracht ist, und den Strahlungseintrittsbereich vorzugsweise ringförmig umgibt.

Bei einer bevorzugten Ausführung eines erfindungsgemäßen Infrarot-Thermometers besteht der Strahlungseintrittsbereich aus einem infrarotdurchlässigen Fenster, das durch das Heizelement beheizbar ist. Dies erfolgt besonders einfach durch einen Heizdraht aus beispielsweise Konstantan, der um das Fenster herumläuft und mit diesem gut wärmeleitend verbunden ist. Das Fenster kann beispielsweise aus einem Chalcogenit-Glas bestehen, das infrarotdurchlässig und leicht formbar ist. Bei einer besonders eleganten Ausführung besteht das Fenster aus einem Halbleiter, insbesondere Silizium, in dem durch Dotierung eine elektrische Leiterbahn gebildet ist, die als Widerstands-Heizleiter dienen kann. Der Vorteil dieser Ausführungen mit einem beheizbaren Fenster besteht darin, daß durch das Heizelement das gesamte vordere Ende der Meßspitze, d.h. die gesamte Stirnfläche der Meßspitze einschließlich des Strahlungseintrittsbereichs auf die gewünschte Temperatur gebracht werden, daher das thermische Gleichgewicht im Ohrkanal durch die Meßspitze praktisch nicht gestört wird, und dadurch bedingte Meßfehler minimiert sind.

Ein erfindungsgemäßes Infrarot-Thermometer weist ferner eine Steuereinrichtung für das Heizelement auf, die mit dem Heizelement und einer Energiequelle, beispielsweise einer Batterie verbunden ist. Die Steuereinrichtung dient zur Bestimmung und/oder Regelung der Temperatur der Meßspitze. Dazu ist sie mit einem Wärmeflußsensor zur Erfassung des Wärmeflusses zwischen der Meßspitze und dem Ohrkanal eines Benutzers und/oder einem Temperatursensor verbunden, der/die vorzugsweise am vorderen Ende der Meßspitze angeordnet ist/sind. Bei einer bevorzugten Ausführung eines erfindungsgemäßen Infrarot-Thermometers wird aber statt zusätzlicher Sensoren das Heizelement selbst als Sensor verwendet. Die Steuereinrichtung ermittelt dann aus meßbaren Kenngrößen des Heizelements, wie z.B. dem elektrischen Widerstand, der Schwellenspannung oder der Durchlaßspannung, die Temperatur des Heizelements und somit auch die des vorderen Endes der Meßspitze.

Bei einem besonders komfortablen erfindungsgemäßen Infrarot-Thermometer steuert die Steuereinrichtung auch das Ein- und Ausschalten des Heizelements vor bzw. nach der Durchführung einer Temperaturmessung. Der Heizvorgang wird spätestens beim Einführen der Meßspitze in den Gehörgang eines Benutzers automatisch eingeleitet und nach erfolgter Temperaturmessung auch wieder automatisch beendet, wobei das Einführen bzw. Herausziehen beispielsweise durch eine Änderung der von einem mit der Steuereinrichtung verbundenen Strahlungstemperatursensor gemessenen Strahlungstemperatur oder durch eine Änderung der vom Temperatursensor gemessenen Temperatur der Meßspitze oder durch ein entsprechendes Signal des Wärmeflußsensors detektierbar ist. Auf diese Weise wird eine Fehlbedienung vermieden und eine stets ausreichend hohe Meßgenauigkeit gewährleistet.

Zur Optimierung der Meßgenauigkeit wird vorzugsweise mittels des Wärmeflußsensors der Wärmefluß zwischen der Meßspitze und dem Ohrkanal eines Benutzers bestimmt und die Heizleistung so geregelt, daß dieser Wärmefluß minimiert wird. Um den Wärmefluß von vorneherein möglichst klein zu halten, ist die Meßspitze vorzugsweise so ausgestaltet, daß die Wärmekapazität und die Wärmeleitfähigkeit der den Ohrkanal berührenden Bereiche der Meßspitze möglichst klein ist. Deshalb besteht die Oberfläche dieser Bereiche vorzugsweise aus Kunststoff.

Bei einer erfindungsgemäßen Schutzkappe ist vor allem der vordere Schutzkappenbereich durch ein elektrisches Heizelement beheizbar. Die Schutzkappe besitzt in an sich bekannter Weise eine becherförmige Form, und weist an ihrem vorderen Ende einen infrarotdurchlässigen Strahlungseintrittsbereich auf. Das Heizelement ist vorzugsweise aus einer leiterbahnförmigen Schicht aus Metall oder einem elektrisch leitfähigen Kunststoff gebildet, die den Strahlungseintrittsbereich ringförmig umgibt. Die Energieversorgung des Heizelements erfolgt über eine elektrische oder elektromagnetische Verbindungseinrichtung vorzugsweise von der Batterie des Infrarot-Thermometers aus. Dieses besitzt beispielsweise entsprechend angeordnete Kontakte, die durch Aufsetzen der Schutzkappe mit deren leiterbahnförmigen Schicht elektrisch verbunden werden. Alternativ ist auch eine Einrichtung zur induktiven Energieübertragung zu einem als Kurzschlußwicklung ausgebildeten Heizelement denkbar.

Weitere Merkmale und Vorteile der vorliegenden Erfindung ergeben sich nicht nur aus den zugehörigen Ansprüchen sondern auch aus der nachfolgenden Beschreibung bevorzugter Ausführungsbeispiele erfindungsgemäßer Meßspitzen für Infrarot-Thermometer, die in den Zeichnungen dargestellt sind. Die Zeichnungen, in denen gleiche Bauteile mit gleichen Bezugszeichen versehen sind, zeigen in schematischer Darstellung:
- Fig. 1: ein erstes Ausführungsbeispiel einer erfindungsgemäßen Meßspitze mit einem ringförmigen Heizelement und einer aufgesetzten Schutzkappe;
- Fig. 2: ein zweites Ausführungsbeispiel einer erfindungsgemäßen Meßspitze mit ei- nem ringförmigen Heizelement und einer aufgesetzten Schutzkappe;
- Fig. 3: ein drittes Ausführungsbeispiel einer erfindungsgemäßen Meßspitze mit einem beheizbaren infrarotdurchlässigen Fenster und einer aufgesetzten Schutzkap- pe;
- Fig. 4: ein viertes Ausführungsbeispiel einer erfindungsgemäßen Meßspitze mit ei- nem beheizbaren infrarotdurchlässigen Fenster;
- Fig. 5: Einzelheiten der in Fig. 3 nur schematisch dargestellten Meßspitze; und
- Fig. 6: eine Schutzkappe mit Heizelement im Querschnitt und in Draufsicht.

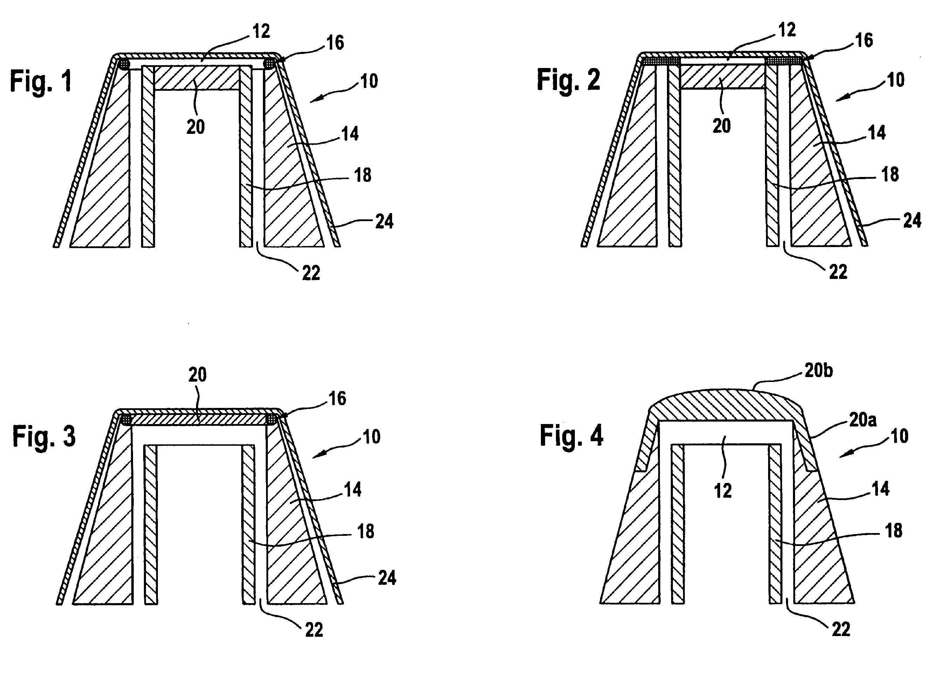

Fig. 1 zeigt eine erfindungsgemäße Meßspitze 10 mit einem sich zu einer Strahlungseintrittsöffnung 12 hin konisch verjüngenden Meßspitzengehäuse 14, das an seinem vorderen Ende ein die Strahlungseintrittsöffnung 12 umgebendes ringförmiges Heizelement 16 aufweist. Das Heizelement 16 ist vorzugsweise elektrisch beheizbar. Von der Strahlungseintrittsöffnung 12 aus erstreckt sich ein Infrarot-Wellenleiter 18 in Längsrichtung durch das Meßspitzengehäuse 14 zu einem in der Figur nicht dargestellten Infrarot-Sensor zur Umwandlung der erfaßten Infrarotstrahlung in ein elektrisches Ausgangssignal, das mittels einer ebenfalls nicht dargestellten Meßelektronik ausgewertet und über eine zugeordnete Anzeigeeinrichtung angezeigt werden kann. Das vordere Ende des Infrarot-Wellenleiters 18 ist mit einem infrarotdurchlässigen Fenster 20 versehen. Der Infrarot-Wellenleiter 18 ist zwecks thermischer Isolation mit einem Zwischenraum 22 zu dem Meßspitzengehäuse 14 angeordnet. Zum Schutz gegen Verschmutzung oder Beschädigung des Fensters ist dieses gegenüber dem vorderen Ende der Meßspitze etwas zurückgesetzt. Auf die Meßspitze 10 ist in an sich bekannter Weise eine an die Meßspitzengehäuseform angepaßte, austauschbare Schutzkappe 24 aufgesteckt.

Bei der in Fig. 2 dargestellten erfindungsgemäßen Meßspitze 10 ist im Vergleich zu dem Ausführungsbeispiel gemäß Fig. 1 lediglich das elektrisch beheizbare ringförmige Heizelement 16 so verbreitert, daß es den Zwischenraum 22 zwischen dem Meßspitzengehäuse 14 und dem Infrarot-Wellenleiter 18 vollständig überdeckt. Der Innendurchmesser des Rings 16 entspricht ungefähr dem Innendurchmesser des Infrarot-Wellenleiters 18. Auf diese Weise deckt das Heizelement das vordere Ende der Meßspitze bis auf die Strahlungseintrittsöffnung 12 ab.

Die in Fig. 3 dargestellte erfindungsgemäße Meßspitze unterscheidet sich von der in Fig. 1 dargestellten Meßspitze dadurch, daß das infrarotdurchlässige Fenster 20 nicht das vordere Ende des Infrarot-Wellenleiters 18 sondern die Strahlungseintrittsöffnung 12 verschließt. Das Heizelement 16 ist gut wärmeleitend mit dem Fenster 20 verbunden. Das Fenster besteht vorzugsweise aus einem ausreichend wärmeleitenden Material, beispielsweise Silizium.

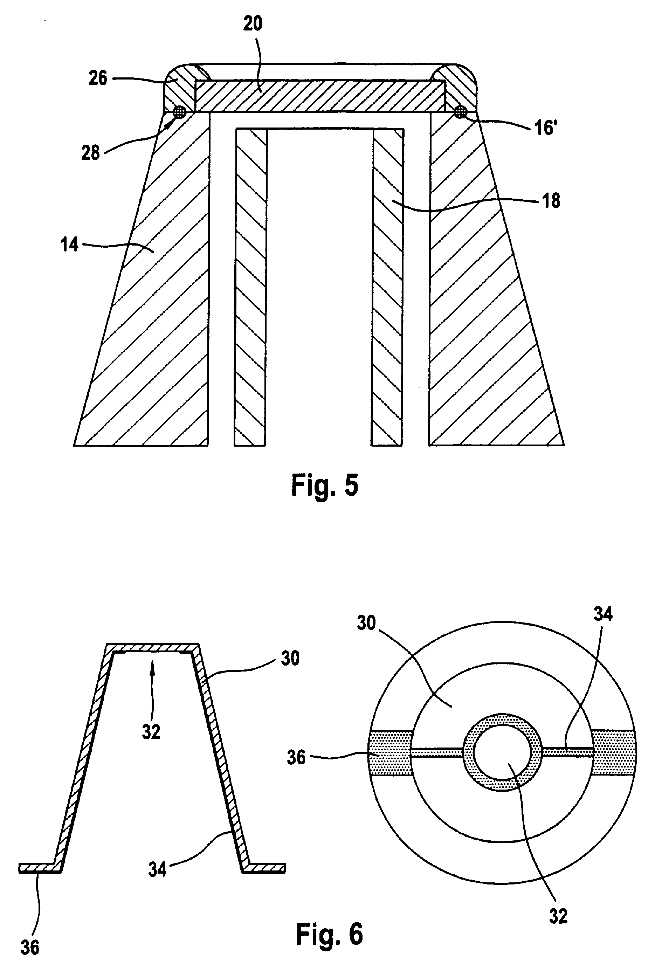

Fig. 5 zeigt Einzelheiten des in Fig. 3 nur schematisch dargestellten Heizelements 16. Es weist einen durch einen Heizdraht 16' beheizbaren Rahmen 26 auf, der das Fenster 20 einfaßt, und dessen Temperatur durch einen Temperatursensor 28 gemessen werden kann. Der Rahmen schützt das Fenster 20 vor Beschädigung und sorgt außerdem für eine besonders gleichmäßige Erwärmung des Fensters 20. Er besteht beispielsweise aus Aluminium oder einem vergleichbar gut wärmeleitenden Material und ist gegenüber dem Meßspitzengehäuse 14 thermisch isoliert.

Die in Fig. 4 dargestellte Meßspitze unterscheidet sich von dem in Fig. 1 dargestellten Ausführungsbeispiel dadurch, daß das vordere Ende der Meßspitze in einem kuppelförmigen infrarotdurchlässigen Fenster 20 endet, das direkt durch ein in der Figur nicht dargestelltes Heizelement beheizbar ist. Das Fenster 20 umfaßt ferner einen ebenfalls nicht dargestellten Temperatursensor zur Bestimmung der Fenstertemperatur. Das Heizelement besteht beispielsweise aus einer Leiterbahn aus Metall oder einem elektrisch leitfähigen Kunststoff, die auf das Fenster aufgebracht ist. Vorzugsweise besteht das Fenster jedoch aus Silizium, sodaß das Heizelement durch Dotierung eines entsprechenden Fensterbereichs direkt ins Fenster integriert sein kann. Aus dem elektrischen Widerstand des dotierten Bereichs kann die Fenstertemperatur bestimmt werden, sodaß auf einen separaten Temperatursensor verzichtet werden kann. Alternativ kann aber natürlich auch ein Temperatursensor vorhanden sein, der vorzugsweise in gleicher Weise ausgeführt ist wie das Heizelement.

Das Fenster besitzt vorzugsweise konisch verlaufende Seitenwände 20a und eine nach vorne gewölbte Stirnfläche 20b, sodaß es leicht in einen Ohrkanal eingeführt werden kann. Bei diesem beheizbaren Fenster 20 führt weder eine Berührung des Ohrkanals mit den Seitenwänden 20a noch ein entsprechender Kontakt mit der Stirnfläche 20b zu einem merklichen Wärmeaustausch zwischen dem Fenster 20 und dem Ohrkanal, woraus eine entsprechend geringe Beeinflussung der Meßergebnisse resultiert. Da praktisch der gesamte vordere Bereich der Meßspitze 10 durch das Fenster 20 hermetisch abgedichtet ist, sind auch Messungen ohne Schutzkappe möglich.

Bei allen Ausführungsbeispielen ist das Heizelement mit einer in den Figuren nicht dargestellten Steuerungseinrichtung verbunden, an die zusätzlich ein Temperatursensor und/oder ein Wärmeflußsensor zur Erfassung des Wärmeflußes zwischen dem vorderen Teil der Meßspitze und dem Ohrkanal eines Benutzers angeschlossen sein kann. Die Steuerungseinrichtung dient zum vorzugsweise automatischen Starten des Heizvorgangs bei Einführen der Meßspitze in einen Ohrkanal, zur Konstanthaltung der Temperatur der Meßspitze oder Regelung zwecks Minimierung des Wärmeflußes während der Strahlungstemperaturmessung, und zum vorzugsweise automatischen Beenden des Heizvorgangs bei Entfernen der Meßspitze aus dem Ohrkanal.

Die in Fig. 6 dargestellte beheizbare Schutzkappe weist in an sich bekannter Weise einen becherförmigen Kunststoffkörper 30 und an ihrem vorderen Ende einen Strahlungseintrittsbereich 32 auf. Ein als Leiterbahn 34 ausgebildetes Heizelement, das beispielsweise aus einer auf die Innenseite des Kunststoffkörpers 30 aufgedampften Metallschicht besteht, umgibt den Strahlungseintrittsbereich 32 ringförmig. Die Enden 36 der Leiterbahn sind kontaktförmig verbreitert. Statt der beheizbaren Schutzkappe 24 ist jedoch auch eine herkömmliche nicht beheizbare Schutzkappe verwendbar, sofern die Meßspitze selbst über ein Heizelement verfügt.

## Patentansprüche

1. Infrarot-Thermometer zur Fiebermessung im Ohr, mit einem Heizelement und einer Meßspitze (10), die an einem vorderen Ende einen Strahlungseintrittsbereich aufweist, wobei ein Infrarot-Sensor in der Meßspitze (10) angeordnet ist,
**dadurch gekennzeichnet,**
**daß** das Heizelement (16) an dem vorderen Ende der Meßspitze (10) angeordnet ist.

2. Infrarot-Thermometer nach Anspruch 1,
**dadurch gekennzeichnet,**
**daß** das Heizelement mit einer auf die Meßspitze aufschiebbaren Schutzkappe (24) verbunden ist.

3. Infrarot-Thermometer nach Anspruch 1,
**dadurch gekennzeichnet,**
**daß** das Heizelement (16) am vorderen Ende der Meßspitze (10) befestigt ist.

4. Infrarot-Thermometer nach Anspruch 1 oder 3,
**dadurch gekennzeichnet,**
**daß** es am vorderen Ende der Meßspitze (10) ein infrarotdurchlässiges Fenster (20) aufweist, das durch das Heizelement (16) beheizbar ist.

5. Infrarot-Thermometer nach Anspruch 4,
**dadurch gekennzeichnet,**
**daß** das Fenster (20) aus einem Halbleiter besteht, und im Fenster durch Dotierung eine elektrische Leiterbahn gebildet ist, die als Widerstands-Heizleiter dienen kann.

6. Infrarot-Thermometer nach Anspruch 1, 2 oder 3,
**dadurch gekennzeichnet,**
**daß** es eine Einrichtung zur Steuerung der Heizleistung des Heizelements aufweist.

7. Infrarot-Thermometer nach Anspruch 6,
**dadurch gekennzeichnet,**
**daß** es einen Temperatursensor (28) und/oder Wärmeflußsensor aufweist, der/die mit der Steuereinrichtung verbunden ist/sind.

8. Infrarot-Thermometer nach Anspruch 7 oder 6,
**dadurch gekennzeichnet,**
**daß** durch die Steuereinrichtung die Temperatur der Meßspitze durch Messung bestimmter Kenngrößen des Heizelements (16) ermittelbar ist.

9. Infrarot-Thermometer nach Anspruch 7, 8 oder 6,
**dadurch gekennzeichnet,**
**daß** bei Auftreten von Änderungen der Meßspitzentemperatur das Heizelement durch die Steuereinrichtung auf konstante Temperatur regelbar und/oder ein- und ausschaltbar ist.

10. Infrarot-Thermometer nach einem der Ansprüche 1 bis 3,
**dadurch gekennzeichnet,**
**daß** das Heizelement als ieiterbahnförmige Schicht (34) aus Metall oder einem elektrisch leitfähigen Kunststoff ausgebildet ist.

11. Infrarot-Thermometer nach Anspruch 2,
**dadurch gekennzeichnet,**
**daß** es eine Einrichtung zur Energieversorgung eines mit einer Schutzkappe verbundenen Heizelements aufweist.

12. Infrarot-Thermometer nach Anspruch 11,
**dadurch gekennzeichnet,**
**daß** die Energieversorgungseinrichtung eine elektrische Verbindungseinrichtung oder eine elektromagnetische Übertragungseinrichtung enthält.

13. Schutzkappe (24) zum Aufsetzen auf eine Meßspitze (10) eines Infrarot-Thermometers, mit einem Strahfungseintrittsbereich (32) an ihrem vorderen Ende, zur Fiebermessung im Ohr,
**dadurch gekennzeichnet,**
**daß** die Schutzkappe (24) an ihrem vorderen Ende ein Heizelement (34) aufweist.

14. Schutzkappe nach Anspruch 13,
**dadurch gekennzeichnet,**
**daß** das Heizelement eine Metallschicht und/oder Kunststoffschicht aus einem elektrisch leitfähigen Kunststoff aufweist.

15. Schutzkappe nach Anspruch 14 oder 13,
**dadurch gekennzeichnet,**
**daß** das Heizelement leiterbahnförmig ausgebildet ist und den Strahlungseintrittsbereich ringförmig umgibt.

## Claims

1. An infrared thermometer for measuring temperature in an ear, with a heating element and a measuring tip (10) which comprises a radiation inlet region at a forward end, wherein an infrared sensor is arranged in the measuring tip (10), **characterised in that** the heating element (16) is arranged at the forward end of the measuring tip (10).

2. An infrared thermometer according to claim 1, **characterised in that** the heating element is joined to a protective cap (24) which may be slid onto the measuring tip.

3. An infrared thermometer according to claim 1, **characterised in that** the heating element (16) is fixed to the forward end of the measuring tip (10).

4. An infrared thermometer according to claim 1 or 3, **characterised in that** it comprises an infrared transparent window (20) at the forward end of the measuring tip (10), which is heatable by the heating element (16).

5. An infrared thermometer according to claim 4, **characterised in that** the window (20) consists of a semiconductor and an electrically conductive track is formed in the window by doping, which can serve as a resistive heating conductor.

6. An infrared thermometer according to claim 1, 2 or 3, **characterised in that** it comprises a device for controlling the heating power of the heating element.

7. An infrared thermometer according to claim 6, **characterised in that** it comprises a temperature sensor (28) and/or a heat flux sensor which is or are connected to the control device.

8. An infrared thermometer according to claim 7 or 6, **characterised in that** the temperature of the measuring tip can be determined by the control device by measuring particular characteristic magnitudes of the heating element (16).

9. An infrared thermometer according to claim 7, 8 or 6, **characterised in that** during the occurrence of changes in the measuring tip temperature the heating element can be controlled by the control device to a constant temperature and/or can be switched on and off.

10. An infrared thermometer according to one of claims 1 to 3, **characterised in that** the heating element is formed as a conductive track shaped coating (34) of metal or of an electrically conductive plastics material.

11. An infrared thermometer according to claim 2, **characterised in that** it comprises a device for supplying energy to a heating element joined to a protective cap.

12. An infrared thermometer according to claim 11, **characterised in that** the energy supply device contains an electrical connection device or an electromagnetic coupling device.

13. A protective cap (24) for positioning on a measuring tip (10) of an infrared thermometer with a radiation inlet region (32) at its forward end for measuring temperature in an ear, **characterised in that** the protective cap (24) comprises a heating element (34) at its forward end.

14. A protective cap according to claim 13, **characterised in that** the heating element comprises a metal coating and/or a plastics coating formed from an electrically conductive plastics material.

15. A protective cap according to claim 14 or 13, **characterised in that** the heating element is formed in the shape of a conductive track and surrounds in the shape of a ring the radiation inlet region.

## Revendications

1. Thermomètre infrarouge pour mesurer la température dans une oreille comprenant un élément chauffant et une pointe de mesure (10) ayant une zone d'ouverture rayonnante à une extrémité avant, dans lequel un capteur infrarouge est disposé à l'intérieur de la pointe de mesure, **caractérisé en ce que** l'élément chauffant (16) est disposé à l'extrémité avant de la pointe de mesure (10).

2. Thermomètre infrarouge selon la revendication 1, **caractérisé en ce que** l'élément chauffant est connecté à un bouchon de sécurité qui peut être placé sur la pointe de mesure.

3. Thermomètre infrarouge selon la revendication 1, **caractérisé en ce que** l'élément chauffant (16) est fixé à l'extrémité avant de la pointe de mesure (10).

4. Thermomètre infrarouge selon l'une des revendications 1 ou 3, **caractérisé en ce qu'**il comprend à l'extrémité avant de la pointe de mesure (10) une fenêtre transparente aux infrarouges (20) qui peut être chauffée par l'élément chauffant.

5. Thermomètre infrarouge selon la revendication 4, **caractérisé en ce que** la fenêtre (20) comprend un élément semi-conducteur et un élément conducteur imprimé qui sont aptes à servir de résistance chauffante.

6. Thermomètre infrarouge selon l'une des revendications 1, 2 ou 3, **caractérisé en ce qu'**il comprend un dispositif pour contrôler la puissance de chauffage de l'élément chauffant.

7. Thermomètre infrarouge selon la revendication 6, **caractérisé en ce qu'**il comprend un capteur de température (28) et/ou un capteur de flux de chaleur qui est/sont connecté(s) au dispositif de contrôle.

8. Thermomètre infrarouge selon l'une des revendications 6 ou 7, **caractérisé en ce que** la température de la pointe de mesure peut être déterminée par l'unité de contrôle par mesure de certaines grandeurs caractéristiques de l'élément chauffant (16).

9. Thermomètre infrarouge selon l'une des revendications 6, 7 ou 8, **caractérisé en ce que,** quand des changements se produisent dans la température de la pointe de mesure, l'élément chauffant peut être réglé à une température constante et/ou allumé ou éteint par le dispositif de contrôle.

10. Thermomètre infrarouge selon l'une des revendications 1, 2 ou 3, **caractérisé en ce que** l'élément chauffant est formé par une couche sensiblement conductrice en métal ou en plastique.

11. Thermomètre infrarouge selon la revendication 2, **caractérisé en ce qu'**il comprend un dispositif pour alimenter en électricité l'élément chauffant connecté au bouchon de sécurité.

12. Thermomètre infrarouge selon la revendication 11, **caractérisé en ce que** le dispositif d'alimentation électrique comprend un dispositif de connexion électrique ou un dispositif de transmission électromagnétique.

13. Bouchon de sécurité (24) apte à être fixé à une pointe de mesure (10) d'un thermomètre de mesure de température dans une oreille ayant une zone d'ouverture rayonnante (32) à une extrémité avant dudit bouchon de sécurité, **caractérisé en ce que** ledit bouchon de sécurité (24) comprend un élément chauffant (34) sur son extrémité avant.

14. Bouchon de sécurité selon la revendication 13, **caractérisé en ce que** l'élément chauffant comprend une couche métallique ou une couche d'un plastique électriquement conducteur.

15. Bouchon de sécurité selon la revendication 14, **caractérisé en ce que** l'élément chauffant est formé par un conducteur imprimé qui entoure la zone d'ouverture rayonnante comme un anneau.
